# EUROPEAN PATENT APPLICATION

(11) **EP 4 745 702 A1**
(43) Date of publication of application: **20.05.2026**
(21) Application number: 24868511.7
(22) Date of filing: 28.08.2024
(51) Int. Cl.: G05D 1/224, G05D 1/246, G06T 17/05, G06T 7/33, G06T 7/70, A47L 9/28, G05D 105/10

(54) **TERMINAL DEVICE AND METHOD FOR GENERATING MAP BY TERMINAL DEVICE**

(30) Priority: 22.09.2023 KR 20230127436
(71) Applicant: Samsung Electronics Co., Ltd., Suwon-si, Gyeonggi-do 16677 (KR)
(72) Inventor: KIM, Injoo, Suwon-si Gyeonggi-do 16677 (KR)
(74) Representative: Gulde & Partner
(86) International application number: PCT/KR2024/012851
(87) International publication number: WO 2025/063532

(57) **Abstract**

A terminal device for generating a 3D map is disclosed. A processor of the present device: stores, in a memory, an image of a space where a robot cleaner is located, the image being captured by a camera; when data of a map for an indoor space generated by the robot cleaner is received through a communication unit, generates a 3D map for the indoor space on the basis of the captured image and the map generated by the robot cleaner; and controls a display to display the generated 3D map.

## Description

### [TECHNICAL FIELD]

Apparatuses and methods consistent with the disclosure relate to a terminal device capable of generating a 3D map and a method for generating the same.

### [Background Art]

A robot cleaner is an electronic device that automatically performs cleaning while moving around an indoor space. Recently, robot cleaners that utilize cleaning maps for efficient and accurate cleaning have been developed and distributed.

Robot cleaners may generate maps of indoor spaces using various sensors. However, since robot cleaners typically clean while in contact with the floor, there is a significant difference between the map generated by the robot cleaner's own sensors and the indoor space as seen from the user's perspective. Consequently, conventional robot cleaners have offered limited usability of the maps they generate, resulting in relatively low user satisfaction.

### [Disclosure of Invention]

### [Solution to Problem]

According to an aspect of the present disclosure, a terminal device according to at least one embodiment includes a communication unit, a memory, a camera, a display, and a processor to perform communication with a robot cleaner.

The processor is configured to store, in the memory, an image of a space where a robot cleaner is located, the image being captured by the camera; generate a 3D map for the space based on the captured image, the map generated by the robot cleaner based on data being received through the communication unit; and control the display to display the generated 3D map.

Meanwhile, a robot cleaner includes a driving unit to drive the robot cleaner, a communication unit to communicate with a terminal device, at least one sensor, a memory, and a processor.

The processor is configured to control the driving unit to drive the robot cleaner, receive sensing values sensed by the at least one sensor while the robot cleaner is moving, generate a map of a space in which the robot cleaner is located based on the sensing values, and store the generated map in the memory, transmit data for the map to the terminal device via the communication unit, and receive data regarding a 3D map generated by matching the map with a 3D point cloud map from the terminal device via the communication unit, and stores the data in the memory.

Meanwhile, according to at least one embodiment of the present disclosure, a method for generating a map by a terminal device including a 3D camera includes: generating a 3D point cloud map based on captured data from the 3D camera for a space in which a robot cleaner is located; receiving data for a map generated by the robot cleaner for the space; generating a 3D map of the space by matching the 3D point cloud map with a map generated by the robot cleaner; and displaying the generated 3D map.

Meanwhile, according to one embodiment of the present disclosure, a terminal device provides a non-transitory computer-readable recording medium storing a computer program for generating a 3D map.

The computer program may sequentially perform generating a 3D point cloud map of a space based on captured data for the space in which the robot cleaner is located, receiving data for a map generated by the robot cleaner for the space, generating a 3D map for the space by matching the 3D point cloud map with the map generated by the robot cleaner, and displaying the generated 3D map.

### [Brief Description of Drawings]

FIG. 1 is a diagram illustrating a terminal device and a method for generating a 3D map using a robot cleaner according to an embodiment of the present disclosure.
FIG. 2 is a block diagram illustrating a configuration of a terminal device according to an embodiment of the present disclosure.
FIG. 3 is a diagram illustrating an example of a 3D point cloud map generated by a terminal device according to an embodiment of the present disclosure.
FIG. 4 is a diagram illustrating a map generated by a robot cleaner according to an embodiment of the present disclosure.
FIGS. 5 and 6 are diagrams for describing a process of extracting floor information during 3D map generation by a terminal device according to an embodiment of the present disclosure.
FIGS. 7 and 8 are diagrams illustrating various examples of 3D maps generated by a terminal device according to an embodiment of the present disclosure.
FIG. 9 is a diagram for describing a process of displaying graphic objects on a 3D map generated by a terminal device according to an embodiment of the present disclosure.
FIG. 10 is a diagram for describing semantic information on a 3D map of a terminal device according to an embodiment of the present disclosure.
FIG. 11 is a block diagram for describing a configuration of a robot cleaner.
FIG. 12 is a flowchart illustrating a method for generating a map by a terminal device according to an embodiment of the present disclosure.
FIG. 13 is a sequence diagram illustrating the operation order of a terminal device and a robot cleaner according to an embodiment of the present disclosure.
FIG. 14 is a flowchart illustrating the overall process of a terminal device according to an embodiment of the present disclosure.

### [Mode for Invention]

General terms that are currently widely used were selected as terms used in various embodiments of the present disclosure in consideration of functions in the present disclosure, but may be changed depending on the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the present disclosure. Therefore, the terms used in the present disclosure should be defined on the basis of the meaning of the terms and the contents throughout the present disclosure rather than simple names of the terms.

In the present disclosure, an expression "have," "may have," "include," "may include," or the like, indicates existence of a corresponding feature (for example, a numerical value, a function, an operation, a component such as a part, or the like), and does not exclude existence of an additional feature.

An expression "at least one of A and/or B" is to be understood to represent "A" or "B" or "any one of A and B."

Expressions "first," "second," "1st" or "2nd" or the like, used in the present disclosure may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

Singular expressions are intended to include plural expressions unless the context clearly represents otherwise. It should be further understood that terms "include" or "configure" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

In the disclosure, a "module" or a "~er/or" may perform at least one function or operation, and be implemented by hardware or software or be implemented by a combination of hardware and software. In addition, a plurality of "modules" or a plurality of "~ers/~ors" may be integrated in at least one module and be implemented by at least one processor (not illustrated) except for a "module" or a "~er/or" that needs to be implemented by specific hardware.

In the present disclosure, the term user may refer to a person using an electronic device or a device used by the person.

Hereinafter, an embodiment of the disclosure will be described in detail with reference to the accompanying drawings.

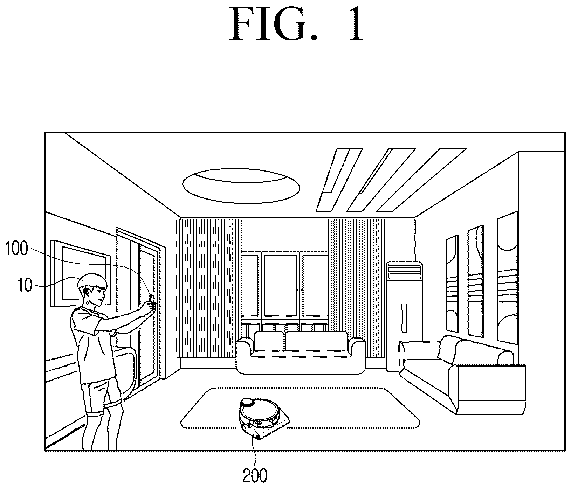

FIG. 1 is a diagram illustrating operations of a terminal device and a robot cleaner according to an embodiment of the present disclosure.

Referring to FIG. 1, a user 10 may use his/her terminal device 100 to capture images of the interior of an indoor space.

Separately, the robot cleaner 200 may generate a map while moving within the space.

The robot cleaner 200 is a device that autonomously moves and cleans using a drive motor and wheels. The robot cleaner 200 utilizes various sensors, such as a lidar sensor, an infrared sensor, an image sensor, and an ultrasonic sensor, to sense its location within the space, the characteristics of the floor, the shape of the space, and the position and shape of objects (home appliances, furniture, etc.) within the space. While FIG. 1 illustrates the robot cleaner 200 operating within a typical home environment, the robot cleaner 200 may be used in various environments, such as offices, buildings, factories, and government offices. Hereinafter, this is collectively referred to as a "space."

A user 10 may capture images of the interior of a space within which a robot cleaner 200 is located by rotating the terminal device 100 while activating the camera of the terminal device 100.

The terminal device 100 may be implemented as various types of devices capable of capturing images, such as a mobile phone, tablet PC, laptop PC, camera, PDA, or electronic organizer.

The terminal device 100 according to an embodiment of the present disclosure may be implemented in various forms and may independently provide various services depending on the form. Furthermore, the terminal device 100 may also provide services that link with other terminal devices.

The terminal device 100 may generate a captured image that constructs a three-dimensional image of the interior of an indoor space by connecting image frames continuously captured by the camera while rotating. Such a captured image may be utilized as a map because it represents the entire indoor space. The terminal device 100 may generate a 3D map of the space based on the captured image and the map generated by the robot cleaner 200.

For example, the terminal device 100 may generate a 3D map by combining the map generated by the robot cleaner 200 with the floor area of the captured image that three-dimensionally constructs the interior of an indoor space.

As another example, the terminal device 100 may generate a 3D point cloud map from the captured image, and then generate a 3D map by combining the 3D point cloud map and the map generated by the robot cleaner 200.

The operation of generating a 3D map using the map generated by the terminal device 100 and the map generated by the robot cleaner 200 may be performed by the terminal device 100, but is not necessarily limited thereto. The robot cleaner 200 may also receive data from the terminal device 100 and match the data with the map generated by the robot cleaner 200 to create a 3D map. Alternatively, an external device (e.g., a server device) other than the terminal device 100 and robot cleaner 200 may receive the maps generated by the terminal device 100 and robot cleaner 200, respectively, and generate a 3D map.

Since the robot cleaner 200 moves in close contact with the floor, the map generated by the robot cleaner 200 is generated based on data sensed from a viewpoint below a height of the robot cleaner 200. In contrast, a user captures the same space from their own eye level. Therefore, by matching the maps generated by the terminal device 100 and robot cleaner 200, the corresponding space may be represented three-dimensionally.

The generated 3D map may be utilized in various ways. This will be described in detail in the following section.

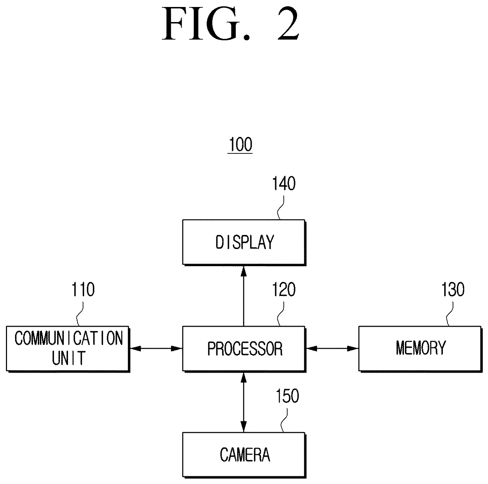

FIG. 2 is a block diagram illustrating a configuration of the terminal device 100 according to an embodiment of the present disclosure.

The terminal device 100 includes a communication unit 110, a processor 120, a memory 130, a display 140, and a camera 150.

The communication unit 110 is configured to communicate with external device. The communication unit 110 may include wired or wireless input/output interfaces (or input/output terminals) according to various standards. For example, the communication unit 110 may include various interfaces such as a high definition multimedia interface (HDMI), a mobile high-definition link (MHL), universal serial bus (USB), a display port (DP), thunderbolt, a video graphics array (VGA) port, an RGB port, a D-subminiature (D-SUB), a wireless LAN network (Wi-Fi) based on a digital visual interface (DVI) AP, Bluetooth, Zigbee, wired/wireless local area network (LAN), a wide area network (WAN), Ethernet, IEEE 1394, Audio Engineering Society/European Broadcasting Union (AES/EBU), optical, and coaxial. The communication unit 110 may transmit and receive various signals and data while communicating with the robot cleaner 200.

The processor 120 is a component for controlling an operation of the terminal device 100. The processor 120 may be implemented by a digital signal processor (DSP), a microprocessor, or a timing controller (TCON) that processes a digital signal. However, the processor 120 is not limited thereto, but may include one or more of a central processing unit (CPU), a micro controller unit (MCU), a micro processing unit (MPU), a controller, an application processor (AP), a communication processor (CP), and an ARM processor, or an artificial intelligence (AI) processor, or may be defined by these terms. In addition, the processor 120 may be implemented by a system-on-chip (SoC) or a large scale integration (LSI) in which a processing algorithm is embedded, or may be implemented in the form of a field programmable gate array (FPGA). The processor 120 may perform various functions by executing computer executable instructions stored in the memory 130. In FIG. 2, only one processor 120 is illustrated, but the number of processors 120 may be implemented as multiple.

The memory 130 is configured to store various data and programs required for the operation of the terminal device 100. The memory 130 may be implemented in volatile memory such as static random access memory (S-RAM) and dynamic random access memory (D-RAM), non-volatile memory such as flash memory, read only memory (ROM), erasable programmable read only memory (EPROM), and electrically erasable programmable read only memory (EEPROM), a hard disk drive (HDD), a solid state drive (SSD), etc.

The memory 130 may be accessed by the processor 120. The processor 120 may perform operations such as reading/writing/modifying/deleting/updating data on the memory 130. In FIG. 2, only one memory 130 is included separately from the processor 120, but in some embodiments, the memory 130 may be implemented in plural. At least some of the memory may be installed in the processor 120.

The display 140 is a component for displaying various screens. For example, the processor 120 controls the display 140 to display the generated 3D map. The display 140 may be implemented in various types of displays such as a liquid crystal display (LCD), an organic light emitting diode (OLED), a liquid crystal on silicon (LCoS), a digital light processing (DLP), a quantum dot (QD) display panel, quantum dot light-emitting diodes (QLED), micro light-emitting diodes (µLED), a mini LED, and the like. Meanwhile, the display 140 may be implemented as a touch screen coupled with a touch sensor, a flexible display, a rollable display, a 3D display, a display to which a plurality of display modules are physically connected, and the like.

The camera 150 is configured to capture images. Although FIG. 2 illustrates a single camera 150, the camera may include a stereo camera, a 3D camera, or the like. The 3D camera is a camera used to capture and generate three-dimensional images or videos. Unlike a general 2D camera, the 3D camera composes a captured image by including depth information, may accurately determine the distance and spatial position of an object through depth information, and is utilized in various applications. For example, the camera 150 may be implemented as a stereo camera, a time of flight (TOF) camera, a depth camera, a multi-lens array camera, a stereo vision system, a fused light detection and ranging (LIDAR) camera, etc. In addition, the terminal device 100 may include a 3D LIDAR sensor. The 3D LIDAR sensor is a sensor that may measure the physical properties of a subject, such as distance, direction, speed, temperature, material distribution, and concentration characteristics, by analyzing the laser light reflected from a subject after irradiating light, such as a laser, to the subject (object). The processor 120 may generate a map of an indoor space based on captured images of the camera 150 and sensing values of various sensors. For example, the processor 120 may generate a 3D point cloud map. The 3D point cloud map is a map representing a data structure that represents the location and shape of an object in a three-dimensional space. Such a map is composed of a series of 3D points (or dots), each point representing a coordinate in space and generally having (x, y, z) coordinates. The 3D point cloud map is used to model the user's real environment and integrate virtual objects in virtual reality (VR) and augmented reality (AR). The processor 120 receives a map generated by the robot cleaner 200 using various sensors through the communication unit 110. In this case, the map generated by the robot cleaner 200 may be in 2D or 3D form. For convenience of description, the map generated by the robot cleaner 200 may be referred to as a cleaning map in the present disclosure. When the robot cleaner includes a vision sensor or a camera, the cleaning map may also be generated as a 3D map.

The processor 120 generates a single 3D map based on the generated 3D point cloud map and the cleaning map received from the robot cleaner 200. The processor 120 may compare a floor portion of the 3D point cloud map with the cleaning map to search for matching reference points, and match the 3D point cloud, map, and cleaning map based on the reference points to generate the 3D map.

The specific details of matching the 3D point cloud map with the map generated by the robot cleaner 200 will be described below.

The 3D map generated by the processor 120 may be utilized in various ways. For example, the processor 120 may display the generated 3D map through the display 140 of the terminal device 100 according to a user's command. The user 10 may intuitively confirm the generated 3D map through the display 140. In this case, the processor 120 may control the display 140 to additionally display, on the 3D map, graphic objects related to electronic products within the space. This will be described in detail in the following section.

As another example, the processor 120 may transmit a 3D map to the robot cleaner 200 through the communication unit 110. The robot cleaner 200 may perform more precise cleaning with the received map. When the robot cleaner 200 does not have a vision sensor or an image sensor, the cleaning map generated by the robot cleaner 200 may not accurately display spatial structures such as rooms, living rooms, and bathrooms, or the locations of various home appliances or furniture within the space. Therefore, the robot cleaner 200 may not identify the internal characteristics of the space with the cleaning map alone, and thus may not selectively clean only specific areas. However, when the processor 120 transmits the 3D map to the robot cleaner 200, the robot cleaner 200 may perform selective cleaning for each area. For example, when a user inputs a user command to clean under a dining table, the robot cleaner 200 may identify a dining table area based on the 3D map, move to the identified area, and perform cleaning. In addition, the processor 120 may transmit the generated 3D map to an external device.

Hereinafter, a detailed description will be given of the 3D point cloud map and the map generated by the robot cleaner 200.

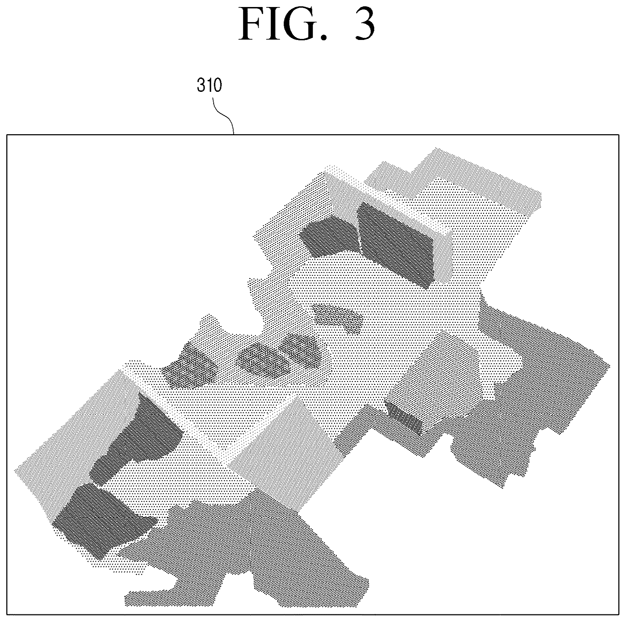

FIG. 3 is a diagram illustrating an example of a 3D point cloud map 310 generated by a terminal device 100 according to an embodiment of the present disclosure.

When the terminal device 100 is equipped with a TOF or 3D LIDAR sensor, a 3D camera, etc., the processor 120 may acquire depth information of each object in a space using the sensors and camera, and then generate the 3D point cloud map 310 based on the depth information. Hereinafter, a method for generating the 3D point cloud map 310 using the terminal device 100 including a 3D camera will be described.

The user 10 acquires information within the indoor space while moving around the indoor space with the terminal device 100 including the 3D camera. Based on the acquired information, the processor 120 analyzes images and data within the indoor space and extracts depth information for generating the 3D point cloud map 310. Here, the depth information may have data expressed as coordinates. Thereafter, the processor 120 generates the 3D point cloud map 310 representing positions or information of objects and a structure of an indoor space as 3D points (or dots), based on the extracted information.

Referring to FIG. 3, the 3D cloud map 310 may express not only the structure and shape of spaces such as living rooms, rooms, and kitchens, but also various objects placed within the spaces, such as home appliances or furniture.

When a user inputs a manipulation to move or rotate the 3D point cloud map 310 while the 3D point cloud map 310 is displayed on the display 110, the processor 120 may control the display 110 to display the 3D point cloud map 310 at different angles, such as up, down, right, or left, or to display a changed appearance when the location is moved within space, depending on the manipulation.

When the 3D camera or the depth camera is not provided, the processor 120 may also generate a 3D point cloud map from images captured by the camera 150. For example, the processor 120 extracts feature points from images captured by the camera 150 and extracts pose information of the camera 150 or the terminal device 100 based on the feature points.

The processor 120 may extract feature points using the visual simultaneous localization and mapping (VSLAM) technique, but is not necessarily limited thereto. Each image frame may be divided into multiple blocks, and pixel representative values of each block may be compared to extract matching feature points.

The processor 120 may track pose information from multiple captured images. The pose information may include, for example, information regarding how the camera position moves based on key frames among the captured image frames. Key frames may be frames that include matching feature points among the image frames, allowing the position of the camera 150 or the terminal device 100 to be estimated by comparing two image frames. The processor 120 may estimate depth information for each object included in the captured image based on the tracked pose information. The processor 120 may collect points corresponding to the estimated depth information to generate the 3D point cloud map.

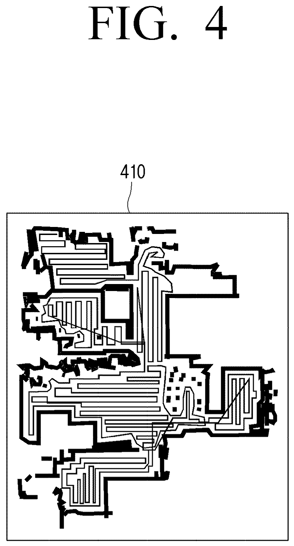

FIG. 4 is a diagram illustrating a map generated by the robot cleaner 200 according to an embodiment of the present disclosure.

The robot cleaner 200 may generate a cleaning map 410 for an indoor space using a camera or various sensors while moving through the indoor space. FIG. 4 illustrates a case where the robot cleaner 200 generates the 2D cleaning map.

When the robot cleaner 200 generates a 2D map, the robot cleaner 200 may generate the 2D map 410 based on data acquired through various sensors while moving through the space for cleaning. The robot cleaner 200 may generate the 2D map using various sensors for detecting obstacles and SLAM technology. The robot cleaner 200 may identify obstacles and walls within the space based on the sensing values from the sensors, and may use a distance measurement method between the identified objects to understand the spatial structure, shape, location, shape of objects, etc. In addition, the robot cleaner 200 uses the SLAM technology to measure its location and generate a map of its surroundings. The simultaneous Localization and mapping (SLAM) technology enables simultaneous localization and mapping of a surrounding environment, and a technology that estimates its own location and generates a map of its surroundings.

Meanwhile, when the robot cleaner 200 generates a 3D map, an additional process is required beyond the 2D map generation process. To generate the 3D map, the robot cleaner 200 should be equipped with a vision sensor and the fusion SLAM should be running. The vision sensor is a sensor that collects and processes visual information, acquires images or videos of the surrounding environment, and provides a realistic visual experience in VR and AR systems. The fusion SLAM is the SLAM technology that combines the functions of a vision sensor with LIDAR technology. The fusion SLAM integrates various sensors and data sources to perform simultaneous localization and mapping. The robot cleaner 200 may acquire 3D images or coordinates using the sensors and technologies described above. The robot cleaner 200 may generate a partial 3D point cloud map by utilizing the acquired 3D information and 2D information. Since the robot cleaner 200 has a limited field of view that the robot cleaner 200 itself can observe during travel for mapping or during a cleaning traveling process, there is a limitation in generating a 3D point cloud map for an entire indoor space. Therefore, the robot cleaner 200 may generate the partial 3D point cloud map, not the entire 3D point cloud map. Thereafter, the robot cleaner 200 generates a 3D map by matching the 3D LandMark information of the image information representing a specific point or object in a 3D space with the LIDAR distance information.

Referring to FIG. 4, the 2D map generated by the robot cleaner 200, i.e., the 2D cleaning map 410, may additionally display the structure and shape of the entire space, the location and shape of objects within the space, and the actual cleaning travel path of the robot cleaner 200. However, the cleaning travel path may be deleted depending on the user selection.

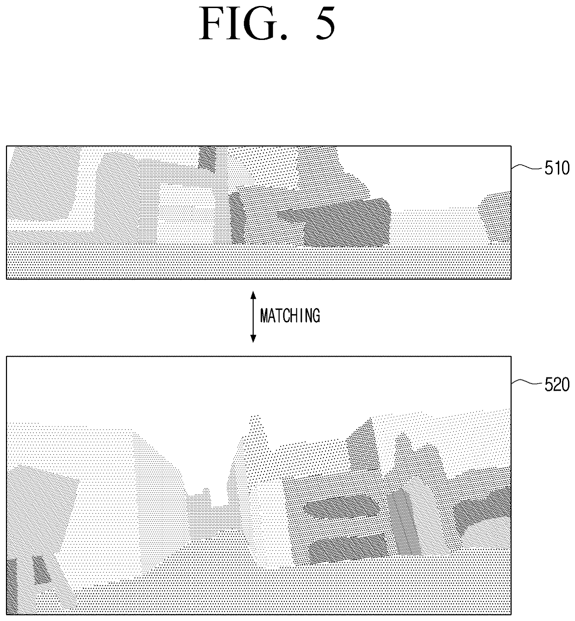

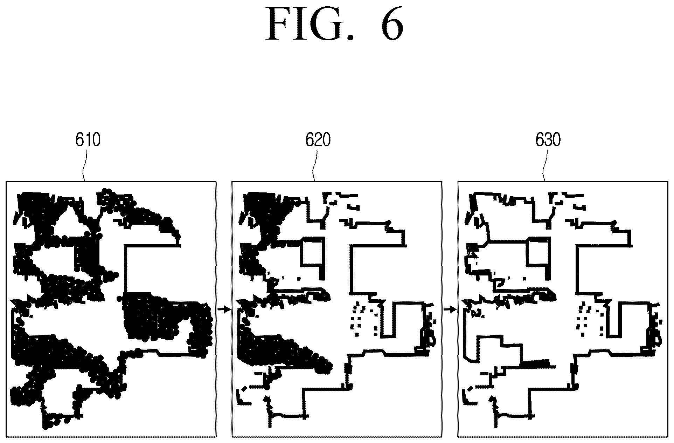

FIGS. 5 and 6 are diagrams illustrating a method for generating a 3D map by a terminal device according to an embodiment of the present disclosure.

The processor 120 of the terminal device 100 may generate a 3D map by matching the generated 3D point cloud map 310 with the map 410 generated by the robot cleaner 200. To match the two maps, the 2D information considering the height of the robot cleaner should be extracted from the 3D point cloud map 310. Specifically, in order to match the 2D information extracted from the 3D point cloud map 310 with the map 410 generated by the robot cleaner 200, the matching of reference points on the 2D map is required.

FIG. 5 illustrates an image 510 captured from the viewpoint of the robot cleaner 200 and an image 520 captured by the user 10 in consideration of height information of the robot cleaner 200. The robot cleaner 200 generates a 2D map using multiple images captured while traveling within a space, including the image 510 of FIG. 5. The terminal device 200 may also generate a map using multiple images captured within a space, including the image 520 of FIG. 5.

In order to match the 2D map generated from the image 510 taken from the viewpoint of the robot cleaner 200 with the 3D map generated from the image 520 directly taken by the user 10 using the terminal device 100, the following specific process is required.

When the robot cleaner 200 generates a 2D map, the floor information considering the height information of the robot cleaner 200 is extracted from the 3D point cloud map 310 generated by the terminal device 100. Here, the floor information refers to the map information on the 3D point cloud map 310 viewed from a height similar to the height information of the robot cleaner 200. The height of the robot cleaner 200 may vary for each robot cleaner device, and since the LIDAR sensor is attached, the height information may vary depending on the sensor size. In addition, the height information may vary depending on the inclination and angle of the image or video taken by the user 10. The processor 120 of the terminal device 100 extracts at least one piece of floor information from the 3D point cloud map 310 based on the height information of the robot cleaner 200.

Since the height information of the robot cleaner 200 may not be perfectly horizontal, and the floor surface on which the robot cleaner 200 is placed may not have a consistent height or may have steps, the processor 120 may extract not only floor information for a single height but also a plurality of pieces of floor information for various heights.

The processor 120 extracts at least one piece of 2D map information corresponding to the height information of the robot cleaner based on the at least one piece of floor information extracted from the 3D point cloud map 310. When extracting the plurality of pieces of floor information, the processor 120 may extract the plurality of pieces of 2D map information.

Meanwhile, the 2D map generated based on the plurality of pieces of floor information extracted from the 3D point cloud map 310 may include noise, such as the location of objects in an indoor space and floor curvature. Noise refers to a phenomenon in which images or videos overlap during the process of capturing 3D images, or a phenomenon in which objects are located in non-fixed locations or distortions occurring during the capturing process. When the user 10 generates the 3D point cloud map 310 using the terminal device 100, noise may be generated when extracting floor information due to objects located on the floor of the indoor space, such as toys, books, and trash cans, which are not located in fixed locations. Furthermore, depending on the angle at which the user 10 captures the image, the distortion phenomenon may occur in the floor information, and noise may occur when capturing 3D images, such as panoramas, where images or videos overlap each other.

Referring to FIG. 6, a 2D map 610 with unremoved noise from the floor information, a 2D map 620 with noise partially removed, and a 2D map 630 with all noise removed may be viewed. The processor 120 reconstructs height information z based on the 2D map 630 from which noise has been removed from floor information, and generates a plurality of 2D maps by considering the height information of the robot cleaner 200. Among the plurality of 2D maps, the processor 120 selects the 2D map information that has a similar form to the 2D map generated by the robot cleaner 200 and has the lowest error rate.

Thereafter, the processor 120 acquires information for matching a 3D map, such as a reference point, angle, and scale, between the selected 2D map information and the 2D map generated by the robot cleaner 200. Based on the acquired pieces of information, the reference point, angle, and scale information are calculated, and a process of matching each map into a single map is performed. For example, the processor 120 selects a reference point from the 2D map selected from the 3D point cloud map 310 and the 2D map generated by the robot cleaner 200 based on the indoor structure or location. Thereafter, the processor 120 adjusts the angles so that each map may face the same direction based on the reference point. Once the matching of the reference point and the angle is complete, the processor 120 adjusts the scale so that each map may be overlapped into one map. Specifically, the processor 120 calculates variables for reference points (x, y), a reference angle (theta), and a scale (r) from a plurality of 2D maps extracted from the 3D point cloud map 310, and selects a 2D map on the 3D point cloud map 310 with the minimum RMS error among the 2D map generated by the robot cleaner 200 and the plurality of 2D maps based on the calculated values. The RMS error refers to an error value that measures an average difference between the value predicted by the prediction model and the actual value. The processor 120 performs a process of calculating the variables for the reference points (x, y), the reference angles (theta), and the scales (r) of the selected 2D map and the 2D map generated by the robot cleaner 200, and selecting the reference point based on the feature points. Thereafter, the processor 120 matches each map into a single map based on the reference points. In this way, the order in which the reference points, angles, and scale information are calculated and applied during the matching process is not limited to this example and may be varied.

Meanwhile, when the robot cleaner 200 may also generate a 3D map, the processor 120 extracts height information from the 3D map generated by the robot cleaner 200 based on the floor information of the robot cleaner 200. Thereafter, the processor 120 performs matching between the 3D point cloud map 310 corresponding to the corresponding height and the 3D map generated by the robot cleaner 200 to generate a single map. The matching process is the same as described above, including reference point, angle, and scale information, so a redundant description will be omitted.

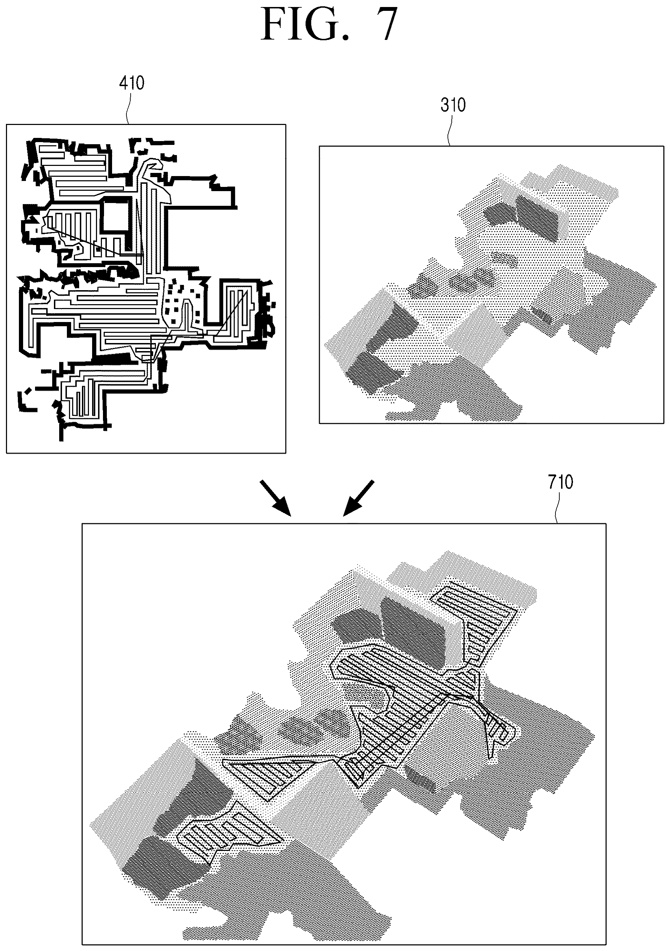

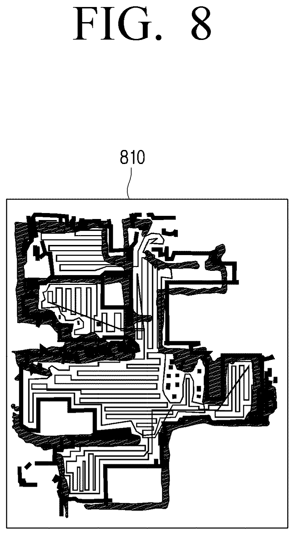

FIGS. 7 and 8 are diagrams illustrating various examples of the 3D map generated by the terminal device 100 according to an embodiment of the present disclosure.

Referring to FIG. 7, as an example, the terminal device 100 matches a 2D map 410 generated by the robot cleaner 200 during actual cleaning with the 3D point cloud map 310 generated by directly capturing the user 10 to generate a single 3D map 710. The generated 3D map 710 may express not only the locations and shapes of various objects within a space, but also the travel path of the robot cleaner 200 on the floor of the space. The method for generating a 3D map has been described in detail in the above section, so a redundant description will be omitted.

FIG. 8 is a map 810 obtained by converting, into a 2D form, a 3D map 710 generated by matching a 3D point cloud map 310 with a map 410 generated by the robot cleaner. The 2D map 810 has noise from the indoor floor removed for greater precision, and displays the area where the robot cleaner 200 has actually cleaned. Furthermore, the 2D map 810 complements the limitations of the robot cleaner 200, which has a limited field of view, and enables more detailed display than the generated 2D map 410. The 2D map 810 illustrated in FIG. 8 is merely an example, and the terminal device 100 may reconstruct and provide various types of maps based on the generated 3D map.

Meanwhile, the process of generating a 3D map 710 by matching maps is one embodiment of the present disclosure, and may be performed in the processor 120 of the terminal device 100 or directly in the processor of the robot cleaner 200. In addition, it may be performed without a matching operation through a separate server. The entity performing a 3D map matching task is not limited thereto and may be implemented in various ways.

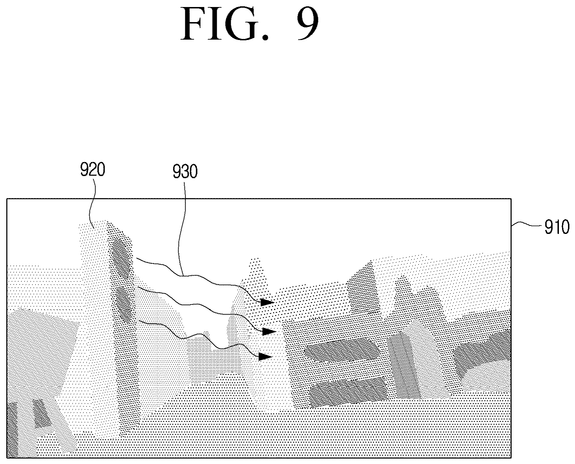

FIG. 9 is a diagram for describing a process of displaying graphic objects on a 3D map generated by the terminal device 100 according to an embodiment of the present disclosure.

The processor 120 may add and display graphic objects 920 and 930 related to the operation of various electronic products placed in an indoor space on a 3D map 910 generated by matching two maps.

FIG. 9 illustrates a case where a graphic object 920 corresponding to a shape of an air conditioner located in an indoor space and a graphic object 930 related to the operation of the air conditioner are displayed together.

When a user confirms the 3D map of FIG. 9, the user may intuitively recognize that the air conditioner is currently operating.

The processor 120 may receive information about the operation of the air conditioner through the communication unit 110. When the operating state changes, the processor 120 may change the graphic object 930 to express the operating state. For example, the direction of airflow and the strength of airflow from an air conditioner within an indoor space may be expressed as a graphic object 930. When the strength of the wind increases, the display 140 may be controlled to increase the size of the graphic object 930 or add a wind-shaped line. Furthermore, the processor 120 may display the cooling set temperature in text format. As another example, the processor 120 may communicate with an air purifier and display the operation status, airflow direction, and strength of the air purifier as a graphic object. When the robot cleaner is cleaning, the processor 120 may also display the location of the robot cleaner. The processor 120 may also display the operating state of various other home appliances.

Although not illustrated in FIG. 9, graphic objects representing various menus may be additionally displayed on the map 910. Alternatively, the processor 120 may utilize various graphic objects displayed on the map 910 as menus. For example, when a user selects an air conditioner object 920 on the map 910 of FIG. 9, the processor 120 may execute a control application for controlling the operation of the air conditioner and display the execution screen on the display 140.

As described above, the 3D map generated by the terminal device 100 and the robot cleaner 200 in conjunction with each other may also be utilized as a user interface.

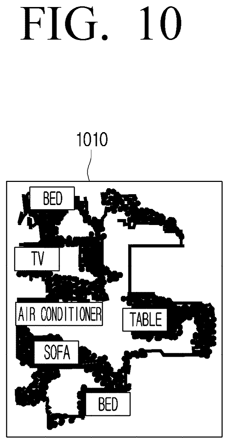

FIG. 10 is a diagram for describing semantic information on a 3D map of the terminal device 100 according to an embodiment of the present disclosure.

FIG. 10 illustrates an example of a map 1010 displaying semantic information.

The semantic information includes information configured to enable the robot cleaner to identify the structure and shape of a space, the type and location of objects within the space, etc. For example, it refers to information necessary for cleaning tasks, such as detecting and recognizing obstacles such as furniture, walls, and home appliances, or collecting information necessary to identify and remove dust, hair, etc., from the floor.

By utilizing the map 1010 including the semantic information, the robot cleaner may identify the locations of furniture, home appliances, and obstacles.

Meanwhile, when the processor 120 displays the semantic information on the 3D map 710, the robot cleaner 200 may receive the 3D map 710 through the terminal device 100 and utilize the semantic information that was not detected by the robot cleaner 200. Specifically, when the robot cleaner 200 includes a vision sensor or image sensor, the robot cleaner 200 may directly generate a cleaning map including semantic information. However, when the robot cleaner 200 does not include such sensors, it may only generate a map representing the spatial structure or shape, and may not identify the meaning of each point within the space. In this case, when the 3D map generated by the terminal device 100 is provided to the robot cleaner 200, the robot cleaner 200 may recognize the semantic information within the 3D map. The terminal device 100 or the robot cleaner 200 may analyze the shape of each object included in the 3D map, identify the type of object, and utilize this information as the semantic information.

As another example, the user 10 may directly add the semantic information to the 3D map 710. The processor 120 may transmit data for the 3D map, including the user-added semantic information, to the robot cleaner 200.

After matching the 3D map, the locations of objects such as furniture or home appliances may change, or new obstacle information may be updated. In this case, the object position information and obstacle update information need to be updated in the 3D map. For example, after the 3D map is completed, when the robot cleaner 200 scans a new obstacle while cleaning and obtains new map information, or when the locations of furniture or home appliances change, the 3D map needs to be updated. The 3D map update task may be performed whenever the robot cleaner 200 updates the cleaning map while performing cleaning. The process of updating the 3D map may include extracting 2D information based on the height information of the robot cleaner from the 3D point cloud map and matching the updated 2D map with the map of the robot cleaner.

The map matching process has been described in detail above, and therefore, a description thereof will be omitted. When the update is performed, the processor 120 stores a new 3D map in the memory 130 and transmits the stored new 3D map to the robot cleaner 200 via the communication unit 110.

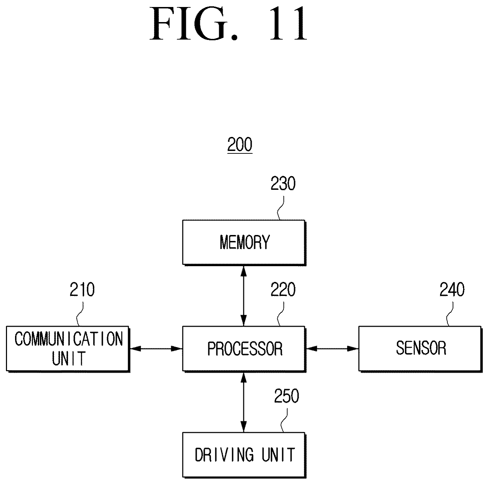

FIG. 11 is a block diagram illustrating the configuration of the robot cleaner 200 according to an embodiment of the present disclosure.

According to FIG. 11, the robot cleaner 200 includes a communication unit 210, a processor 220, a memory 230, a sensor 240, and a driving unit 250.

The communication unit 210 is a configuration for transmitting and receiving information with an external device and/or an external network. When connected to the terminal device 100 through the communication unit 210, the user may input various user operations through the terminal device 100. The communication unit 2110 receives a control signal corresponding to the user operation from the terminal device 100 and transmits the received control signal to the processor 220. Accordingly, the user may also remotely control the operation of the robot cleaner 200. The communication unit 210 may include at least one of a wireless Internet module, a short-range communication module, and a location information module. Here, the wireless Internet module refers to a module for wireless Internet access, and may be built into or external to the robot cleaner 200. In this case, as the wireless Internet technology, a wireless LAN (WLAN) (Wi-Fi) technology, a wireless broadband (Wibro) technology, a world interoperability for microwave access (Wimax) technology, a high speed downlink packet access (HSDPA) technology, or the like, may be used. In addition, the short range communications module may indicate a module for short range communications. Here, as a short range communications technology, a Bluetooth technology, a radio frequency identification (RFID) technology, an infrared data association (IrDA) technology, an ultra wideband (UWB) technology, a ZigBee technology, or the like, may be used.

The sensor 240 is a sensor that detects the surrounding environment. Specifically, the sensor 240 may include at least one of a LiDAR sensor, a vision sensor, an image sensor, an infrared sensor, an ultrasonic sensor, a gyro sensor, an acceleration sensor, and a proximity sensor. The processor 220 may detect the distance to a wall or obstacle in the indoor space to be cleaned based on the sensing value of the sensor 240.

The driving unit 250 is a component for moving the main body of the robot cleaner 200. The driving unit 250 may include wheels for movement and a motor for rotating the wheels. The wheels may be left and right driving wheels installed on the lower sides of the robot cleaner main body, respectively. In addition, the driving unit 250 may be provided with at least one auxiliary wheel on the floor of the main body of the cleaner to minimize friction between the robot cleaner 200 and the floor while guiding the movement of the robot cleaner 200.

The processor 220 may recognize the location within a space and determine the driving direction and path based on the values detected by the sensor 240 while the robot cleaner is performing cleaning. The processor 220 generates a cleaning map for the indoor space based on the driving path and then stores the map in the memory 230. Once the cleaning map for the entire space is generated, the processor 220 may transmit data for the generated cleaning map to the terminal device. As described in the various embodiments described above, when the terminal device 100 generates a single 3D map based on the 3D point cloud map and the cleaning map and then transmits the data, the processor 220 may receive data for the 3D map through the communication unit 210 and store the data in the memory 230. The processor 220 performs cleaning using the stored map.

The processor 220 may identify each area of the indoor space based on the 3D map. For example, when a user inputs a cleaning command for a specific area of an indoor space, the processor 220 identifies the location of the specific area where the cleaning command was input by the specific user based on the 3D map received from the terminal device, and controls the driving unit 250 to move the robot cleaner 200 to the identified location.

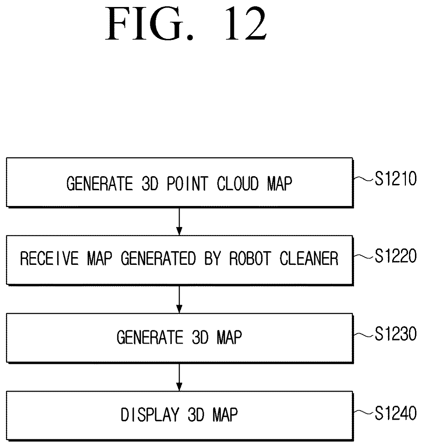

FIG. 12 is a flowchart illustrating a method for generating a map by a terminal device according to an embodiment of the present disclosure.

Referring to FIG. 12, when a user captures an indoor space where the robot cleaner is located using the camera of the terminal device, the terminal device generates a 3D point cloud map based on the captured data (S1210). Thereafter, the terminal device receives data for the map generated by the robot cleaner (S1220) and matches the 3D point cloud map with the map generated by the robot cleaner to generate a single 3D map (S1230). The terminal device may also display the generated 3D map (S1240).

Meanwhile, the step of generating a 3D map may include extracting floor information from a 3D point cloud map and extracting 2D map information corresponding to the height information of the robot cleaner based on the floor information. In this case, a plurality of pieces of 2D map information may be provided. Thereafter, the 2D map information generated by the terminal device is compared with the map generated by the robot cleaner, and the 2D map with the lowest error value is selected. The reference point, angle, and scale information are acquired from the selected 2D map information and the 2D map generated by the robot cleaner, and a single 3D map is generated based on the reference point. The process of generating the 3D map has been described in detail above and is therefore omitted.

Meanwhile, when the robot cleaner is capable of generating the 3D map, the height information is extracted from the generated 3D map and, based on the height information, the 3D map generated by the robot cleaner is matched with the 3D point cloud map to generate the single 3D map.

Furthermore, the graphic objects related to the operation of electronic products placed within the indoor space may be additionally displayed on the 3D map.

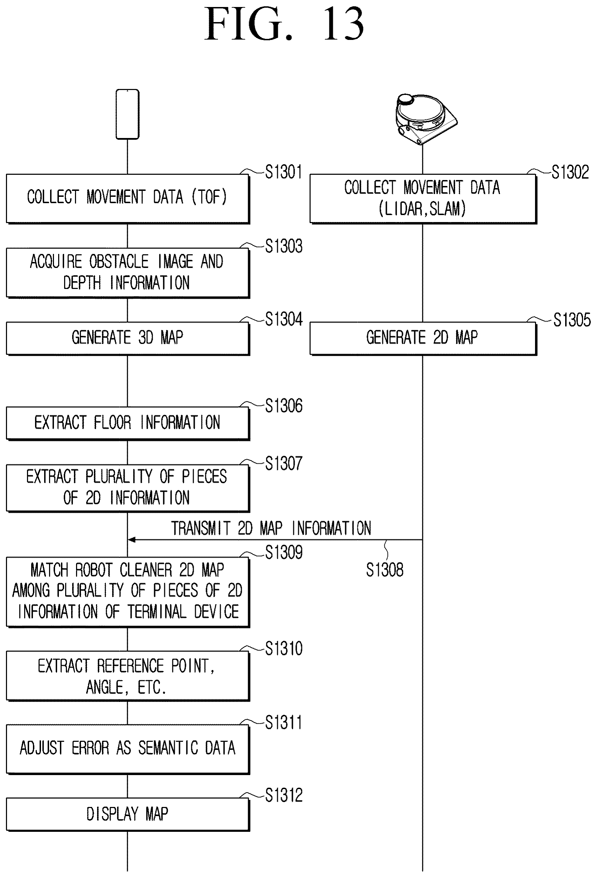

FIG. 13 is a sequence diagram illustrating the operation order of a terminal device and a robot cleaner according to an embodiment of the present disclosure.

Referring to FIG. 13, the terminal device collects movement data using a technology such as TOF (S1301). The robot cleaner collects movement data using the LIDAR sensor and SLAM technology (S1302). This process may occur simultaneously or sequentially for both the terminal device and the robot cleaner. Furthermore, the terminal device acquires obstacle images and depth information (S1303) and generates the 3D point cloud map (S1304). The robot cleaner generates the 2D map based on the values detected by the sensor (S1305). The floor information is extracted from the 3D point cloud map (S1306), and based on the floor information, the plurality of pieces of 2D information are extracted considering the height information of the robot cleaner (S1307). The robot cleaner transmits the generated 2D map information via the communication unit of the terminal device (S1308). Among the plurality of pieces of 2D information of the terminal device, the 2D information with the lowest error value is selected and matched with the 2D map of the robot cleaner (S1309). In this case, during the matching process, the reference point and angular scale information are extracted (S1310). When the semantic data is displayed on the map, the error is adjusted using the semantic data (S1311), ultimately generating the single 3D map. The terminal device displays the generated 3D map on the display (S1312) or transmits the generated 3D map to the robot cleaner.

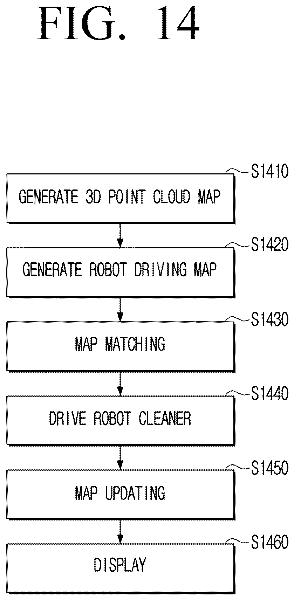

FIG. 14 is a flowchart illustrating the overall process of a terminal device according to an embodiment of the present disclosure.

Referring to FIG. 14, the terminal device generates the 3D point cloud map (S1410), and the robot cleaner generates the cleaning map while traveling (S1420). Thereafter, the terminal device matches the 3D point cloud map with the map generated by the robot cleaner (S1430). When the robot cleaner obtains new map information while cleaning (S1440), the terminal device may update the 3D map (S1450). The terminal device displays at least one of the generated 3D map and the updated 3D map on the display of the terminal device (S1460).

Meanwhile, various embodiments described above may be applied to a product as embodiments alone, or at least some of the contents may be combined with other embodiments of the present disclosure and implemented together.

According to various embodiments of the present disclosure, the terminal device may generate the 3D map based on captured images taken by the terminal device itself and the 2D map generated by the robot cleaner. This may be more accurate than the maps generated by the terminal device or robot cleaner alone. By viewing the generated 3D map, the user may more easily understand the structure and shape of the space.

In particular, various embodiments of the present disclosure may overcome the limitations of the field of view of the robot cleaner, enabling efficient cleaning by the robot cleaner. In addition, even when the robot cleaner does not include a vision sensor or an image sensor, the robot cleaner may identify areas in a classified manner, thereby enabling selective cleaning. In addition, when there is a change in object information of an indoor space or in positions of obstacles, the 3D map may be updated, thereby enabling efficient and accurate cleaning travel. Furthermore, by using the 3D map, the robot cleaner and other home appliances may be controlled through the interworking with the other home appliances.

Meanwhile, the methods according to various embodiments described above may be implemented in the form of program code for performing each step, and stored and distributed in a recording medium. In this case, a device equipped with a recording medium may perform the method for generating a map according to various embodiments described above.

For example, program code for sequentially performing a step of generating a 3D point cloud map of a space based on captured data obtained by capturing a space in which a robot cleaner is located, and a step of generating a 3D map of the space by matching a map generated by the robot cleaner for the space with a 3D point cloud map may be stored in various recording media.

Such a recording medium may be various types of non-transitory computer-readable recording media such as ROM, RAM, memory chip, memory card, external hard, hard, CD, DVD, magnetic disk, or magnetic tape.

Although embodiments of the present disclosure have been illustrated and described hereinabove, the present disclosure is not limited to the abovementioned specific embodiments, but may be variously modified by those skilled in the art to which the present disclosure pertains without departing from the gist of the present disclosure as disclosed in the accompanying claims. These modifications should also be understood to fall within the scope and spirit of the present disclosure.

## Claims

1. A terminal device, comprising:
a communication unit configured to communicate with a robot cleaner;
a memory,
a camera:
a display; and
a processor,
wherein the processor is configured to store, in the memory, an image captured by the camera of a space in which the robot cleaner is located,
generate a 3D map of the space, based on the captured image and a map generated by the robot cleaner, the map being generated by the robot cleaner for the space based on data being received through the communication unit, and
control the display to display the generated 3D map.

2. The terminal device as claimed in claim 1, wherein the processor is configured to transmit the generated 3D map to the robot cleaner through the communication unit.

3. The terminal device as claimed in claim 1, wherein the camera includes a 3D camera,
the processor is configured to activate the 3D camera based on a user command being input, and generate a 3D point cloud map based on a captured image of an interior of the space by the 3D camera as the terminal device rotates within the space while the activated 3D camera captures the interior of the space, and
generate the 3D map by matching the 3D point cloud map with a map generated by the robot cleaner .

4. The terminal device as claimed in claim 3, wherein the processor is configured to extract floor information from the 3D point cloud map, and extract 2D map information corresponding to a height of the robot cleaner based on the floor information, and
identify at least one reference point by comparing the 2D map information with the map generated by the robot cleaner, and match the 3D point cloud map with the map generated by the robot cleaner based on the at least one reference point.

5. The terminal device as claimed in claim 4, wherein the processor is configured to extract the 2D map information into a plurality of pieces based on the floor information and a plurality of different heights, and
identify the 2D map information having a minimum error and match the identified 2D map information with the map generated by the robot cleaner by comparing the plurality of pieces of 2D map information with the map generated by the robot cleaner.

6. The terminal device as claimed in claim 3, wherein the map generated by the robot cleaner is a 3D map, and
the processor is configured to extract height information from the 3D map generated by the robot cleaner, and
match the 3D map generated by the robot cleaner with the 3D point cloud map based on the height information.

7. The terminal device as claimed in claim 3, wherein the processor is configured to control the display to additionally display, on the 3D map, a graphic object related to an operation of at least one electronic product arranged within the space.

8. A robot cleaner, comprising:
a driving unit driving the robot cleaner;
a communication unit communicating with a terminal device;
at least one sensor;
a memory; and
a processor,
wherein the processor is configured to control the driving unit to drive the robot cleaner, receive sensing values sensed by the at least one sensor while the robot cleaner is moving, generate a map of a space in which the robot cleaner is located based on the sensing values, and store the generated map in the memory,
transmit data for the map to the terminal device via the communication unit, and
receive data regarding a 3D map generated by matching the map with a 3D point cloud map from the terminal device via the communication unit, and store the data in the memory.

9. The robot cleaner as claimed in claim 8, wherein, based on a cleaning command for a specific area within the space being input, the processor is configured to identify a location of the specific area within the space based on the 3D map, and control the driving unit to move to the identified location.

10. A method for generating a map by a terminal device including a 3D camera, comprising:
generating a 3D point cloud map based on captured data from the 3D camera for a space in which a robot cleaner is located;
receiving data for a map generated by the robot cleaner for the space;
generating a 3D map of the space by matching the 3D point cloud map with a map generated by the robot cleaner; and
displaying the generated 3D map.

11. The method as claimed in claim 10, wherein the generating of the 3D map of the space by matching the 3D point cloud map with the map generated by the robot cleaner includes:
extracting floor information from the 3D point cloud map, and extracting 2D map information corresponding to a height of the robot cleaner based on the floor information;
identifying at least one reference point by comparing the 2D map information with the map generated by the robot cleaner; and
matching the 3D point cloud map with the map generated by the robot cleaner based on the at least one reference point.

12. The method as claimed in claim 10, wherein the generating of the 3D map of the space by matching the 3D point cloud map with the map generated by the robot cleaner includes:
extracting floor information from the 3D point cloud map, and extracting 2D map information corresponding to a height of the robot cleaner based on the floor information;
acquiring a plurality of pieces of 2D map information for a plurality of different heights based on the floor information from the extracted 2D map information;
identifying 2D map information having a minimum error by comparing the plurality of acquired pieces of 2D map information with the map generated by the robot cleaner, respectively;
identifying at least one reference point by comparing the identified 2D map information with the map generated by the robot cleaner; and
matching the identified 2D map information with the map generated by the robot cleaner based on the at least one identified reference point.

13. The method as claimed in claim 10, wherein the map generated by the robot cleaner is a 3D map, and
the generating of the 3D map of the space by matching the 3D point cloud map with the map generated by the robot cleaner includes:
extracting height information of the 3D map generated by the robot cleaner; and
matching the 3D map generated by the robot cleaner with the 3D point cloud map based on the height information.

14. The method as claimed in claim 10, comprising:
additionally displaying, on the 3D map, a graphic object related to an operation of at least one electronic product arranged within the space.

15. A non-transitory computer-readable storage medium storing a computer command that, when executed by a processor of a terminal device, causes the terminal device to perform an operation, wherein the operation includes:
generating a 3D point cloud map of a space based on captured data for the space in which the robot cleaner is located; and
generating a 3D map of the space by matching a map generated by the robot cleaner for the space with the 3D point cloud map.
